# EUROPEAN PATENT APPLICATION

(11) **EP 4 418 375 A1**
(43) Date of publication of application: **21.08.2024**
(21) Application number: 22898911.7
(22) Date of filing: 11.11.2022
(51) Int. Cl.: H01M 8/1004, H01M 4/86, H01M 8/10

(54) **MEMBRANE-ELECTRODE ASSEMBLY FOR FUEL CELL, COMPRISING LINEAR POROUS SILICA NANOPARTICLES, AND FUEL CELL COMPRISING SAME**

(30) Priority: 26.11.2021 KR 20210165957
(71) Applicant: Kolon Industries, Inc., Seoul 07793 (KR)
(72) Inventor: KIM, Jung Ho, Seoul 07793 (KR); KIM, Jun Young, Seoul 07793 (KR); SONG, Kah-Young, Seoul 07793 (KR); KONG, Nak Won, Seoul 07793 (KR); LEE, Eun Su, Seoul 07793 (KR); KIM, Hyeong Su, Seoul 07793 (KR); LEE, Ju Sung, Seoul 07793 (KR); NAM, Kyoung Sik, Seoul 07793 (KR); PARK, Chan Mi, Seoul 07793 (KR)
(74) Representative: Ter Meer Steinmeister & Partner
(86) International application number: PCT/KR2022/017749
(87) International publication number: WO 2023/096229

(57) **Abstract**

The present disclosure relates to a membrane-electrode assembly for a fuel cell and a fuel cell comprising same and, more particularly, to a membrane-electrode assembly for a fuel cell and a fuel cell comprising same, the membrane-electrode assembly for a fuel cell including linear porous silica in a catalyst layer and thus enhancing the performance of a fuel cell in a low-humidity environment.

## Description

### [TECHNICAL FIELD]

The present disclosure relates to a membrane-electrode assembly for a fuel cell, which has improved performance in a low-humidification environment.

### [BACKGROUND ART]

Fuel cells are batteries including a power generation system that directly converts chemical reaction energy, such as the oxidation/reduction reaction of hydrogen and oxygen contained in hydrocarbon-based fuel materials such as methanol, ethanol, and natural gas, into electrical energy, and are in the limelight as a next-generation clean energy source that can replace fossil energy due to their eco-friendly characteristics of high-energy efficiency and low pollutant emissions.

Since such fuel cells have the advantage of being able to produce a wide range of output through a stack configuration by stacking unit cells, and have energy densities that are 4 to 10 times those of small lithium batteries, they are attracting attention as small and mobile portable power sources.

A stack that actually generates electricity in a fuel cell has a structure in which several to dozens of unit cells composed of a membrane-electrode assembly (MEA) and a separator (also called a bipolar plate) are stacked, and the membrane-electrode assembly generally has a structure in which an oxidation electrode (anode or fuel electrode) and a reduction electrode (cathode or air electrode) are formed at both sides of the electrolyte membrane in a state that an electrolyte membrane is therebetween.

Fuel cells can be classified into alkaline electrolyte fuel cells and polymer electrolyte membrane fuel cells (PEMFC), etc., depending on the state and type of electrolyte, and the polymer electrolyte membrane fuel cells among them are in the limelight as portable, automotive, and home power supply devices due to their advantages such as a low operating temperature of less than 100°C, fast start-up and response characteristics, excellent durability, etc.

Representative examples of the polymer electrolyte membrane fuel cells may include a proton exchange membrane fuel cell (PEMFC), which uses hydrogen gas as fuel, and a direct methanol fuel cell (DMFC), which uses liquid methanol as fuel.

To summarize the reactions that occur in a polymer electrolyte membrane fuel cell, first, when fuel such as hydrogen gas is supplied to the oxidation electrode, hydrogen ions (H⁺) and electrons (e⁻) are generated at the oxidation electrode by an oxidation reaction of hydrogen. The generated hydrogen ions are transferred to the reduction electrode through the polymer electrolyte membrane, and the generated electrons are transferred to the reduction electrode through an external circuit. Oxygen is supplied from the reduction electrode, and oxygen is bonded to hydrogen ions and electrons to produce water by a reduction reaction of oxygen.

Meanwhile, in order to apply fuel cells to fuel cell vehicles (FCV), miniaturization of the fuel cell system is essential, and for this, it is required for this to develop a membrane-electrode assembly (MEA) that can exhibit excellent power density per unit area, and it is necessary to increase the durability of the MEA catalyst layer particularly for practical operation of FCV

### [DETAILED DESCRIPTION OF INVENTION]

### [TECHNICAL PROBLEMS]

An object of the present disclosure is to provide a membrane-electrode assembly with improved performance and durability in a low-humidification environment.

Another object of the present disclosure is to provide a fuel cell with improved performance and durability in a low-humidification environment by applying the membrane-electrode assembly structure.

### [TECHNICAL SOLUTION]

To achieve the above object, a membrane-electrode assembly for a fuel cell according to one embodiment of the present disclosure includes a first catalyst layer containing linear porous silica and a polymer electrolyte membrane.

The pores of linear porous silica may include one or more forms of silica nanotube and porous silica nanowire.

Linear porous silica may have a length of 30 to 3,000 nm.

Linear porous silica may have a diameter of 10 to 200 nm.

Linear porous silica in the first catalyst layer may be contained in an amount of 1 to 20% by weight based on the total weight of the first catalyst layer.

The first catalyst layer may contain an ionomer in an amount of 34 to 40% by weight based on the total weight of the first catalyst layer.

The first catalyst layer may have a thickness of 0.2 to 5 µm.

The first catalyst layer may be positioned between the polymer electrolyte membrane and a second catalyst layer that does not contain linear porous silica or contains it in a smaller amount.

The ionomer content of the first catalyst layer may be larger than that of the second catalyst layer.

A fuel cell according to another embodiment of the present disclosure includes the membrane-electrode assembly for a fuel cell.

### [EFFECT OF INVENTION]

The membrane-electrode assembly of the present disclosure can solve an ionic conductivity reduction problem occurring due to drying of the electrolyte membrane in a low-humidification environment by containing linear porous silica nanoparticles with a large specific surface area in the catalyst layer so that the catalyst layer can effectively contain moisture discharged from the electrolyte membrane.

### [BRIEF DESCRIPTION OF THE DRAWING]

FIG. 1 is a view showing various conceptual diagrams of the forms of linear porous silica.
FIG. 2 is a view schematically showing a structure in which linear porous silica is contained in the first catalyst layer.
FIG. 3 is a schematic diagram showing the overall configuration of the fuel cell.
FIG. 4 is a photograph taken with a transmission electron microscope (TEM) of linear porous silica used in an Example of the present disclosure.
FIG. 5 shows low-humidity performance evaluation results of the membrane-electrode assemblies (MEAs) manufactured by Examples and Comparative Examples of the present disclosure.

### [BEST MODE FOR CARRYING OUT THE INVENTION]

Hereinafter, embodiments of the present disclosure will be described in detail with reference to the drawings so that those skilled in the art to which the present disclosure pertains can easily implement the present disclosure. However, the present disclosure may be implemented in many different forms and is not limited to the embodiments described herein.

A fuel cell membrane-electrode assembly according to one aspect of the present disclosure is characterized by containing linear porous silica in the catalyst layer. A catalyst layer containing linear porous silica may be formed on only one surface of the polymer electrolyte membrane, but the catalyst layer containing linear porous silica may also be formed on both surfaces thereof.

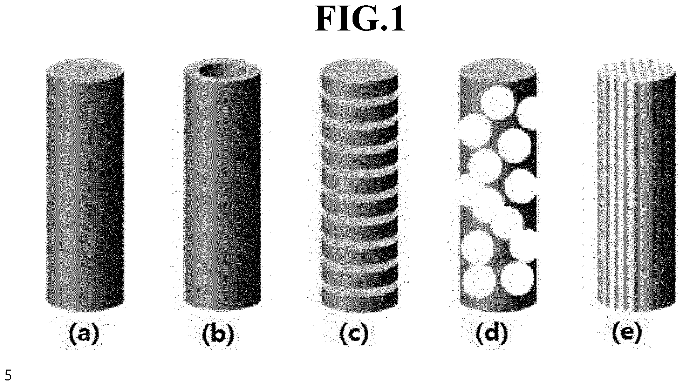

The pores of linear porous silica may include, for example, one or more forms of a silica nanotube and a porous silica nanowire. FIG. 1 shows several specific examples of the shape of pores that can be formed in linear porous silica. FIG. 1(A) shows a linear microporous silica nanowire as a specific example of a porous silica nanowire, showing that pores can be formed very small compared to a linear structure. Even if the micropores are formed, the specific surface area of silica may be more improved than the case without pores. FIG. 1(B) is a specific example of a silica nanotube, conceptually showing that a large tube-shaped pore is formed in a linear direction. FIG. 1(C) is a specific example of a porous silica nanowire, showing a horizontal pore structure in which small pores are formed perpendicular to the linear direction, and the pores are not necessarily limited to the shape of holes, but they may also be made to show a concave-convex shape on the surface of linear silica. FIG. 1(D) is a specific example of a porous silica nanowire, and conceptually shows that pores are formed irregularly (randomly) in linear silica, and examples thereof may include a linear mesoporous silica nanowire or a linear macroporous silica nanowire. FIG. 1(E) is a specific example of a porous silica nanowire, showing a vertical pore structure in which several finely long pores are formed in a linear direction in linear silica. However, the pore shape of linear porous silica of the present disclosure is not limited to the above examples, and is not limited to the shape of the pores as long as it can expand the specific surface area of linear silica.

The catalyst layer containing linear porous silica is positioned to be in contact with the electrolyte membrane so that it can suppress moisture evaporation from the polymer electrolyte membrane by effectively containing moisture through the large specific surface area of silica, and it can help the catalyst layer maintain excellent ion conductivity by allowing the polymer electrolyte membrane and the catalyst layer to maintain appropriate humidity in a low-humidification environment.

Linear porous silica may preferably have a length of 30 to 3,000 nm, 100 to 2,500 nm, 200 to 2,000 nm, or 500 to 1,500 nm. If the length of porous silica is larger than 3,000 nm, problems that the catalyst and ionomer in the catalyst layer are not evenly dispersed and arranged due to silica that does not participate in the chemical reaction in the catalyst layer, and the chemical reaction efficiency of the catalyst layer is reduced due to reduced content may occur. Additionally, since pores may not be sufficiently formed in silica if the length of porous silica is smaller than the above range, a problem in which the moisture-containing effect of porous silica is insignificant may occur.

Linear porous silica preferably has a diameter of 10 to 200 nm, 50 to 150 nm, or 70 to 120 nm. If the diameter of linear porous silica is smaller than 10 nm, the effect of improving the specific surface area due to the porous characteristics of silica may be insignificant due to the excessively small diameter, and if the diameter of linear porous silica is larger than 200 nm, silica may greatly interfere with the catalytic reaction in the catalyst layer and the movement of ionomers so that a problem that the efficiency of the fuel cell is greatly decreased may occur.

Linear porous silica may be prepared using a conventional porous silica preparation method. However, in order for linear porous silica to become a linear shape, for example, an anodic aluminum oxide (AAO) membrane can be used as a mold. For example, linear porous silica can be prepared by filling pores of the AAO membrane with a solution containing a pore-forming agent such as a surfactant and a silica precursor containing silicon, performing hydrolysis and condensation reactions, and then calcination. The silica precursor may include tetramethyl orthosilicate, tetraethyl orthosilicate, tetrapropyl orthosilicate, tetrabutyl orthosilicate, or mixtures thereof, but is not limited thereto. The surfactant may include cetyltrimethylammonium bromide (CTAB), polyalcohol polyol, ethanol, polysorbate 20 (or Tween 20), polysorbate 80 (Tween 80), polyvinylpyrrolidone (PVP), sodium dodecyl sulfate (SDS), dodecyltrimethylammonium bromide (DoTAB), decyltrimethylammonium bromide (DeTAB), poly(ethylene glycol)-poly(propylene glycol)-poly(ethylene glycol) (Pluronic P123), poly(ethylene glycol)-poly(propylene glycol)-poly(ethylene glycol) (Pluronic F127), or mixtures thereof, but is not limited thereto. The hydrolysis, condensation, and calcination conditions may be appropriately selected by a person skilled in the art from ordinary conditions in consideration of reaction conditions and states.

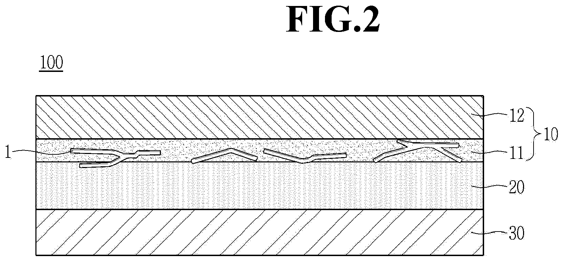

FIG. 2 briefly shows a structure of one embodiment of the membrane-electrode-assembly 100 for a fuel cell of the present disclosure. Referring to FIG. 2, it is preferable that linear porous silica 1 is evenly distributed within the first catalyst layer 11. Each linear porous silica may be distributed to be spaced apart, but it is all right that two or more linear porous silica 1 may be distributed within the first catalyst layer 11 in a partially overlapping state.

Linear porous silica may help maintain a wet environment within the membrane-electrode assembly in a low-humidification environment, but it is not directly involved in the redox reaction of the catalyst layer or not directly involved in hydrogen ion conduction so that it is important that linear porous silica is contained at an appropriate ratio. Specifically, it is preferable that linear porous silica is contained in an amount of 1 to 20% by weight in the first catalyst layer based on the total weight of the first catalyst layer, and when linear porous silica is contained in an amount of less than 1% by weight in the first catalyst layer, the effect of maintaining a wet environment due to porous silica may be insignificant, and when linear porous silica is contained in an amount of more than 20% by weight in the first catalyst layer, the oxidation-reduction reaction caused by the catalyst in the catalyst layer may not sufficiently occur so that fuel cell efficiency may be rather reduced.

The first catalyst layer containing linear porous silica contains an ionomer, and for smooth conduction of hydrogen ions, it is preferable for the first catalyst layer to contain more ionomer than in the case of the catalyst layer that does not contain general porous silica. Specifically, the ionomer content of the first catalyst layer is preferably contained in an amount of 34 to 40% by weight based on the total weight of the first catalyst layer. If the ionomer content in the first catalyst layer is higher than the above range, fuel supply to the platinum catalyst active site may be inhibited, and if the ionomer content in the first catalyst layer is too low, the ion transfer ability of the catalyst layer may be hindered.

The ionomer may include one or more types of ionomers selected from the group consisting of fluorine-based ionomers and hydrocarbon-based ionomers. The hydrocarbon-based ionomers may include all publicly known hydrocarbon-based polymers, for example, sulfonated derivatives of poly(arylene ether)s (SPAEs), poly(arylene sulfide)s (SPASs), polyimides (SPIs), polybenzimidazoles (PBIs), polyphenylenes (PPs), and polyetheretherketone (PEEK). In addition, the fluorine-based ionomers may include all publicly known fluorine-based polymers, for example, perfluorinated sulfonic acid, polyvinylidene fluoride, hexafluoropropylene, trifluoroethylene, polytetrafluoroethylene, or one of their copolymers.

However, the ionomer contained in the catalyst layer along with linear porous silica preferably includes an ionomer having an equivalent weight (EW) of 600 to 1,200 for effective ion conductivity of the catalyst layer.

It is preferable that the first catalyst layer containing linear porous silica specifically has a thickness of 0.2 to 5 µm. When the thickness of the first catalyst layer is thinner than 0.2 µm, the catalyst layer may be thin such an extent that linear porous silica cannot be sufficiently contained within the catalyst layer, and even if linear porous silica is contained in the catalyst layer, the wet environment composition of the catalyst layer (low humidification characteristic improvement) may not occur sufficiently. Conversely, when the thickness of the first catalyst layer is thicker than 5 µm, there may be a problem in that efficiency deterioration is more increased since the chemical reaction of the catalyst does not occur due to the volume occupied by porous silica than the efficiency of the fuel cell improved by creating a wet environment due to the inclusion of linear porous silica.

Therefore, in order to further improve the efficiency of the catalyst layer, a structure in which the first catalyst layer containing linear porous silica is allowed to be formed only in a portion in contact with the polymer electrolyte membrane, and in which a catalyst layer that does not contain porous silica or contains it in a smaller amount is additionally stacked can be applied.

The first catalyst layer may be located between the second catalyst layer and the polymer electrolyte membrane. Here, the second catalyst layer does not contain linear porous silica or contains it in a smaller amount, and it is more preferable in terms of battery performance that the second catalyst layer does not contain linear porous silica or barely contains it. If the second catalyst layer contains linear porous silica, the content of linear porous silica should be less than that of the first catalyst layer, and it may be more less than the first catalyst layer by 1% by weight or more, for example, 1 to 20% by weight, specifically 5% by weight or more, and more specifically 10% by weight or more. FIG. 2 shows one embodiment of the present disclosure, and briefly shows the membrane-electrode assembly 100 in which a first catalyst layer 11 is formed on one surface of the polymer electrolyte membrane 20, and the catalyst layer 10 having a multi-layer structure in which the second catalyst layer 12 that does not contain linear porous silica or contains it in a smaller amount is stacked on the first catalyst layer 11 is formed. FIG. 2 discloses that the catalyst layer 10 including the first catalyst layer 11 are formed only on one surface, but a plurality of catalyst layers may be formed on both surfaces of the polymer electrolyte membrane, and the catalyst layer 10 including the first catalyst layer 11 may be a cathode electrode or an anode electrode, but are not particularly limited.

Due to linear porous silica, the hydrogen ion conduction path within the catalyst layer may be longer, and in order for hydrogen ion conduction to occur smoothly between the first catalyst layer and the second catalyst layer, it is preferable that the ionomer content of the first catalyst layer 11 in the catalyst layer 10 is larger than that of the second catalyst layer 12, but the present disclosure is not limited thereto.

The catalyst layer contains a catalyst. As a catalyst, any catalyst that participates in the reaction of the battery and can be normally used as a catalyst in a fuel cell can be used. Specifically, a platinum-based metal can be preferably used.

The platinum-based metal may include, for example, one selected from the group consisting of platinum (Pt), palladium (Pd), ruthenium (Ru), iridium (Ir), osmium (Os), platinum-M alloys (where M is one or more selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh)), non-platinum alloys, and combinations thereof. More preferably, the platinum-based metal may include a combination of two or more metals selected from the above-described platinum-based catalyst metal group, but is not limited thereto, and any platinum-based catalyst metal that can be used in the present technical field can be used without limitation.

Specifically, the platinum alloys may include one or mixtures of two or more selected from the group consisting of Pt-Pd, Pt-Sn, Pt-Mo, Pt-Cr, Pt-W, Pt-Ru, Pt-Co, Pt-Y, Pt-Ru-W, Pt-Ru-Mo, Pt-Ru-Rh-Ni, Pt-Ru-Sn-W, Pt-Co, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, and combinations thereof.

Additionally, the non-platinum alloys may include one or mixtures of two or more selected from the group consisting of Ir-Fe, Ir-Ru, Ir-Os, Co-Fe, Co-Ru, Co-Os, Rh-Fe, Rh-Ru, Rh-Os, Ir-Ru-Fe, Ir- Ru-Os, Rh-Ru-Fe, Rh-Ru-Os, and combinations thereof.

Such a catalyst can be used as the catalyst itself (black) or can be used by supporting it on a carrier.

The carrier may be selected from carbon-based carriers, porous inorganic oxides such as zirconia, alumina, titania, silica, and ceria, and zeolite. The carbon-based carriers may be selected from graphite, super P, carbon fiber, carbon sheet, carbon black, Ketjen Black, Denka black, acetylene black, carbon nanotube (CNT), carbon sphere, carbon ribbon, fullerene, active carbon, carbon nanofiber, carbon nanowire, carbon nanoball, carbon nanohorn, carbon nanocage, carbon nanoring, ordered nano-/meso-porous carbon, carbon aerogel, mesoporous carbon, graphene, stabilized carbon, activated carbon, and combinations of one or more thereof, but are not limited thereto, and any carrier available in the present technical field may be used without limitation.

Catalyst particles may be located on the surface of the carrier or may penetrate into the carrier while filling the internal pores of the carrier.

When using a precious metal supported on a carrier as a catalyst, a commercially available catalyst can be used, or it can also be manufactured and used by supporting the precious metal on a carrier. Since the process of supporting a precious metal on a carrier is widely known content in the relevant field, even if detailed description is omitted in this specification, it is a content that can be easily understood by those working in the field.

Catalyst particles may be contained in an amount of 20% by weight to 80% by weight based on the total weight of the catalyst layers 10 and 30. If they are contained in an amount of less than 20% by weight, there may be a problem of reduced activity, and if they are contained in an amount exceeding 80% by weight, the active area may be reduced due to agglomeration of the catalyst particles to decrease the catalyst activity conversely.

Additionally, the catalyst layers 10 and 30 may contain a binder to improve adhesive force and transfer hydrogen ions. It is preferable to use an ionomer having ion conductivity as the binder, and since the description of the ionomer is the same as described above, repeated descriptions are omitted.

However, the ionomer can be used alone or in the form of a mixture. In addition, it may optionally be used together with a non-conductive compound to further improve adhesive force with the polymer electrolyte membrane 50. It is desirable to adjust the amount used thereof to suit the purpose of use before using.

The non-conductive compound may include one or more selected from the group consisting of polytetrafluoroethylene (PTFE), tetrafluoroethylene-hexafluoropropylene copolymer (FEP), tetrafluoroethylene-perfluoroalkyl vinyl ether copolymer (PFA), ethylene tetra fluoro ethylene (ETFE), ethylene chloro trifluoro ethylene copolymer (ECTFE), polyvinylidene fluoride, polyvinylidene fluoride-hexafluoropropylene copolymer (PVdF-HFP), dodecylbenzenesulfonic acid, and sorbitol.

The binder may be contained in an amount of 20% by weight to 80% by weight based on the total weight of the catalyst layers 10 and 30. If the binder is contained in an amount of less than 20% by weight, the generated ions may not be transferred well, and if it is contained in an amount exceeding 80% by weight, it is difficult to supply hydrogen or oxygen (air) due to a lack of pores, and the active area at which reaction can be performed may decrease.

The electrode substrates may include a porous conductive substrate so that hydrogen or oxygen can be smoothly supplied thereto. A representative example thereof may include carbon paper, carbon cloth, carbon felt, or metal cloth (a porous film made of a metal cloth in the fiber state or a metal film formed on the surface of a cloth made of polymer fibers), but is not limited thereto. In addition, it is preferable to use electrode substrates 40 and 40' that are water repellent treated with fluorine-based resins to prevent reactant diffusion efficiency from being reduced by water generated during operation of the fuel cell. The fluorine-based resins may include polytetrafluoroethylene, polyvinylidene fluoride, polyhexafluoropropylene, polyperfluoroalkyl vinyl ether, polyperfluorosulfonylfluoride alkoxyvinyl ether, fluorinated ethylene propylene, polychlorotrifluoroethylene, or copolymers thereof.

In addition, a microporous layer may be further included to enhance the diffusion effect of reactants in the electrode substrates. This microporous layer may generally contain a conductive powder with a small particle diameter, for example, carbon powder, carbon black, acetylene black, active carbon, carbon fiber, fullerene, carbon nanotube, carbon nanowire, carbon nanohorn, or carbon nanoring.

The microporous layer is manufactured by coating an electrode substrate with a composition comprising a conductive powder, a binder resin, and a solvent. The binder resin may preferably include polytetrafluoroethylene, polyvinylidene fluoride, polyhexafluoropropylene, polyperfluoroalkyl vinyl ether, polyperfluorosulfonyl fluoride, alkoxyvinyl ether, polyvinyl alcohol, cellulose acetate, or copolymers thereof. The solvent may preferably include alcohols such as ethanol, isopropyl alcohol, n-propyl alcohol, butyl alcohol, and the like, water, dimethylacetamide, dimethyl sulfoxide, N-methylpyrrolidone, tetrahydrofuran, etc.

The coating process may include a screen printing method, a spray coating method, or a coating method using a doctor blade, depending on the viscosity of the composition, but is not limited thereto.

A fuel cell according to another embodiment of the present disclosure may include a membrane-electrode assembly according to one embodiment of the present disclosure.

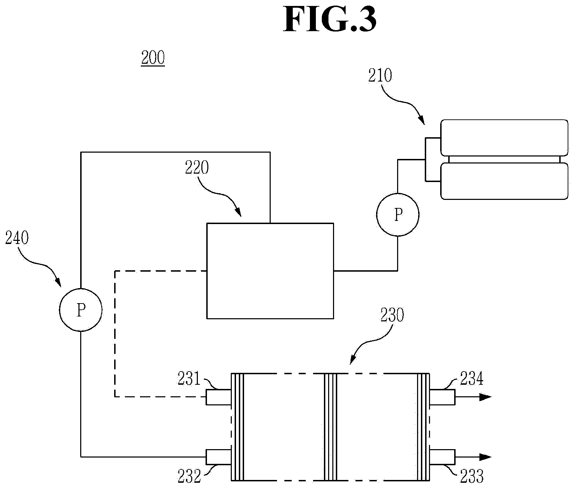

FIG. 3 is a schematic diagram showing the overall configuration of the fuel cell.

Referring to FIG. 3, the fuel cell 200 includes a fuel supply unit 210 that supplies a mixed fuel in which fuel and water are mixed, a reforming unit 220 that reforms the mixed fuel to generate a reformed gas containing hydrogen gas, a stack 230 in which the reformed gas containing hydrogen gas supplied from the reforming unit 220 causes an electrochemical reaction with an oxidizing agent to generate electrical energy, and an oxidizing agent supply unit 240 supplying the oxidizing agent to the reforming unit 220 and the stack 230.

The stack 230 is provided with a plurality of unit cells that generate electrical energy by inducing an oxidation/reduction reaction between the reformed gas containing hydrogen gas supplied from the reforming unit 220 and the oxidizing agent supplied from the oxidizing agent supply unit 240.

Each of the unit cells refers to a unit cell that generates electricity, and includes a membrane-electrode assembly that oxidizes/reduces oxygen in the hydrogen gas-containing reformed gas and the oxidizing agent, and separators (or called bipolar plates, hereinafter referred to as 'separators') for supplying the hydrogen gas-containing reformed gas and the oxidizing agent to the membrane-electrode assembly. The separators are disposed on both sides thereof in a state that the membrane-electrode assembly is placed at the center. At this time, the separators located on the outermost sides of the stack may be particularly called end plates.

Among the separators, an end plate is provided with a pipe-shaped first supply pipe 231 for injecting reformed gas containing hydrogen gas supplied from the reforming unit 220, and a pipe-shaped second supply pipe 232 for injecting oxygen gas, and the other end plate is provided with a first discharge pipe 233 for discharging to the outside the reformed gas containing the hydrogen gas that is ultimately unreacted and remaining in the plurality of unit cells, and a second discharge pipe 234 for discharging to the outside the oxidizing agent that is ultimately unreacted and remaining in the above-described unit cells.

In the fuel cell, since the separator, fuel supply unit, and oxidizing agent supply unit constituting the electricity generation unit are used in a typical fuel cell except that the membrane-electrode assembly 100 according to one embodiment of the present disclosure is used, detailed description is omitted in this specification.

### [MODE FOR CARRYING OUT THE INVENTION]

Hereinafter, embodiments of the present disclosure will be described in detail so that those skilled in the art to which the present disclosure pertains can easily implement it. However, the present disclosure may be implemented in many different forms and is not limited to the embodiments described herein.

### [Example 1]

A surfactant (CTAB) and a silica precursor (TEOS) were filled into the pores of an AAO membrane (Whatman), and hydrolysis and condensation reactions were performed at 90°C for 2 hours. Thereafter, the reaction product was calcined at 550°C for 3 hours to obtain a linear microporous silica nanowire with a diameter of 80 nm and a length of 1,200 nm as a microporous silica nanowire, as shown in FIG. 1(A).

A membrane-electrode assembly was manufactured according to a conventional manufacturing method except that the cathode was constructed using a first catalyst layer containing 5% by weight of the linear microporous silica nanowire and a second catalyst layer that does not contain silica. At this time, the total thickness of the catalyst layer was 14 µm, and the thickness of the first catalyst layer was 3 µm. Nafion was used as an ionomer, and a platinum catalyst was used.

### [Example 2]

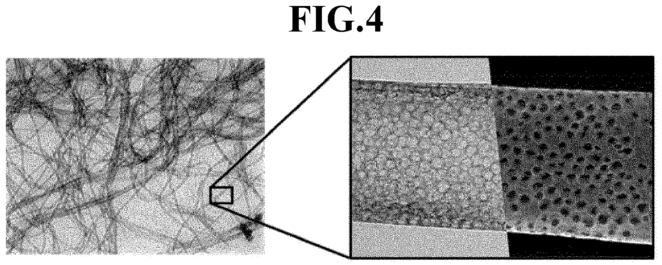

PSS nanoparticles (10 to 70 nm) and a silica precursor (TEOS) were filled into the pores of an AAO membrane (Whatman), and hydrolysis and condensation reactions were performed at 90°C for 2 hours. Thereafter, the reaction product was calcined at 550°C for 5 hours to obtain a linear mesoporous silica nanowire with a diameter of 100 nm and a length of 1,000 nm as a porous silica nanowire, as shown in FIG. 1(D). FIG. 4 shows results of analyzing linear porous silica used in Example 2 with TEM. Referring to FIG. 4, the linear porous silica form with disordered pores can be confirmed.

A membrane-electrode assembly was manufactured in the same manner as in Example 1 except that the linear porous mesoporous silica nanowire prepared as described above was used.

### [Comparative Example 1]

A membrane-electrode assembly was manufactured in the same manner as in Example 1 except that spherical silica (silica nanosphere, size 50 nm) was used instead of a silica nanowire and a second catalyst layer was not installed.

### [Comparative Example 2]

Only a silica precursor (TEOS) was filled into the pores of an AAO membrane without using a pore-forming agent, and hydrolysis and condensation reactions were performed at 90°C for 2 hours to obtain a non-porous silica nanowire.

A membrane-electrode assembly was manufactured in the same manner as in Example 1 except that the non-porous silica nanowire was used.

### [Comparative Example 3]

A membrane-electrode assembly was manufactured in the same manner as in Example 2 except that a second catalyst layer containing a linear porous mesoporous silica nanowire in an amount of 20% by weight was installed.

**[Table 1]**

| | Example 1 | Example 2 | Comparative Example 1 | Comparative Example 2 | Comparative Example 3 |
|---|---|---|---|---|---|
| Type and content of silica contained in first catalyst layer | 5% by weight of microporous silica nanowire¹) | 5% by weight of porous silica nanowire²⁾ | 5% by weight of silica nanosphere (50 nm) | 5% by weight of none porous silica nanowire³⁾ | 5% by weight of porous silica nanowire⁴⁾ |
| Presence or absence of second catalyst layer | Presence | Presence | Absence | Presence | Presence |
| Content and type of silica in second catalyst layer | 0% by weight | 0% by weight | - | 0% by weight | 20% by weight of porous silica nanowire⁵⁾ |
| 1) Diameter: 80 nm, length: 1,200 nm, linear microporous silica nanowire as shown in FIG. 1(A) | | | | | |
| 2), 4), 5) Diameter: 100 nm, length: 1,000 nm, linear mesoporous silica nanowire as shown in FIG. 1(D) | | | | | |
| 3) Diameter: 80 nm, length: 1,200 nm, linear non-porous silica | | | | | |

### [Experimental Example: Membrane-electrode assembly performance comparison]

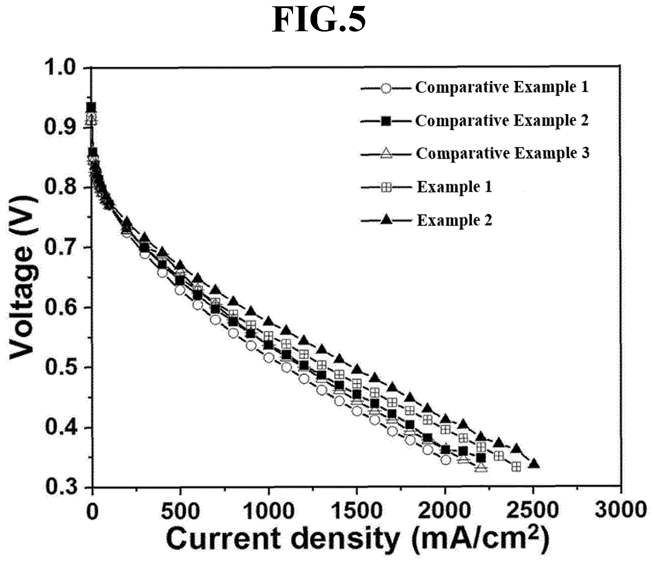

The performances of the membrane-electrode assemblies according to the configurations in Table 1 in a low-humidification environment (humidity 30%) were evaluated and are shown in FIG. 5. Referring to FIG. 5, it can be confirmed that the voltages according to the current densities of Examples 1 and 2 are measured to be significantly higher than those of Comparative Examples 1 and 2 in a low-humidification environment, and in particular, it can be confirmed that the performance of Example 2 including a linear mesoporous silica nanowire is shown to be more excellent.

Although the preferred embodiments of the present disclosure have been described in detail above, the scope of rights of the present disclosure is not limited thereto, and various modifications and improved forms of those skilled in the art using the basic concept of the present disclosure defined in the following claims also fall within the scope of the rights of the present disclosure.

### [Explanation of reference numerals]

100: Membrane-electrode assembly
1: Linear porous silica
10, 30: Electrode
11: First catalyst layer 12: Second catalyst layer
20: Polymer electrolyte membrane
200: Fuel cell 210: Fuel supply unit
220: Reforming unit 230: Stack
231: First supply pipe 232: Second supply pipe
233: First discharge pipe 234: Second discharge pipe
240: Oxidizing agent supply unit

## Claims

1. A membrane-electrode assembly for a fuel cell, comprising:
a first catalyst layer containing linear porous silica; and
a polymer electrolyte membrane.

2. The membrane-electrode assembly for a fuel cell of claim 1, wherein the pores of linear porous silica include one or more forms of silica nanotube and porous silica nanowire.

3. The membrane-electrode assembly for a fuel cell of claim 1, wherein linear porous silica has a length of 30 to 3,000 nm.

4. The membrane-electrode assembly for a fuel cell of claim 1, wherein linear porous silica has a diameter of 10 to 200 nm.

5. The membrane-electrode assembly for a fuel cell of claim 1, wherein linear porous silica in the first catalyst layer is contained in an amount of 1 to 20% by weight based on the total weight of the first catalyst layer.

6. The membrane-electrode assembly for a fuel cell of claim 1, wherein the first catalyst layer contains an ionomer in an amount of 34 to 40% by weight based on the total weight of the first catalyst layer.

7. The membrane-electrode assembly for a fuel cell of claim 1, wherein the first catalyst layer has a thickness of 0.2 to 5 µm.

8. The membrane-electrode assembly for a fuel cell of claim 1, wherein the first catalyst layer is positioned between the polymer electrolyte membrane and a second catalyst layer that does not contain linear porous silica or contains it in a smaller amount.

9. The membrane-electrode assembly for a fuel cell of claim 8, wherein the ionomer content of the first catalyst layer is larger than that of the second catalyst layer.

10. A fuel cell comprising the membrane-electrode assembly for a fuel cell of any one of claims 1 to 9.
